# EUROPEAN PATENT SPECIFICATION

(11) **EP 4 268 431 B1**
(45) Date of publication and mention of the grant of the patent: **12.11.2025**
(21) Application number: 21830512.6
(22) Date of filing: 13.12.2021
(51) Int. Cl.: H04L 41/0654, H04L 41/18, G06F 11/07, G06F 11/30, G06F 11/362, H04L 41/044, H04L 41/0631, H04L 41/0213, H04L 41/0853, H04W 24/04

(54) **TROUBLESHOOTING ANALYTICS CONFIGURED WITH INTENT**
ABSICHTSKONFIGURIERTE STÖRUNGSANALYSE
ANALYSE DE DÉPANNAGE CONFIGURÉE AVEC UNE INTENTION

(30) Priority: 22.12.2020 EP 20383136
(43) Date of publication of application: 01.11.2023
(73) Proprietor: Telefonaktiebolaget LM Ericsson (publ), 164 83 Stockholm (SE)
(72) Inventor: ALVAREZ DOMINGUEZ, Rodrigo, 28016 Madrid (ES); ACEVEDO MONTSERRAT, Pablo, 28420 Galapagar (ES); GALLEGO RODRIGO, Santiago, 28903 Getafe (ES); CASTILLO CASERO, Trinidad, 28850 Madrid (ES); CHENG, Stone, Shanghai 200335 (CN); LV, Jian, Shanghai 200335 (CN); RUIZ, Soledad, 28905 Getafe (ES); COUCEIRO DOMINGUEZ, Manuel, 41930 Bormujos (ES); GRUBAC, Ana, 28043 Madrid (ES); FRANSSON, Martin, 370 24 Nättraby (SE); WEN, Sword w, Guangzhou, Guangdong 510630 (CN); KRAFT, Jonas, 371 38 Karlskrona (SE)
(74) Representative: Ericsson
(86) International application number: PCT/IB2021/061659
(87) International publication number: WO 2022/137012

(56) References cited:
- WO-A1-2020/152586
- US-A1- 2007 100 782
- US-A1- 2011 131 295
- US-A1- 2017 063 651
- "3rd Generation Partnership Project; Technical Specification Group Services and System Aspects; Management and orchestration; Architecture framework (Release 16)", vol. SA WG5, no. V16.6.0, 16 December 2020 (2020-12-16), pages 1 - 30, XP051999901, Retrieved from the Internet <URL:https://ftp.3gpp.org/Specs/latest/Rel-16/28_series/28533-g60.zip 28533-g60.doc> [retrieved on 20201216]

## Description

### RELATED APPLICATIONS

This application claims priority to European Patent Application No. 20383136.7, filed 22 December 2020.

### TECHNICAL FIELD

The solution presented herein relates generally to troubleshooting in wireless networks, and more particularly to a centralized approach to troubleshooting, including programmable troubleshooting, in wireless networks, e.g., in Operations, Administration, and Maintenance (OAM) areas of 5^{th} Generation (5G) networks.

### BACKGROUND

Because sustained revenue growth, subscriber retention, etc. is significantly tied to subscriber experience, wireless service providers strive to deliver excellent subscriber experience. Part of that effort includes troubleshooting network problems, e.g., using network tracing, distributed tracing, etc. While various troubleshooting tools exist for troubleshooting wireless networks, current troubleshooting tools require substantial interaction with, and offline work by, troubleshooting engineers. This results in significant and undesirable delays in identifying the source(s) of the problem(s) within the network. Further, many current troubleshooting tools are configured statically, and thus cannot be programmed. Thus, there remains a need for improved troubleshooting techniques.

US2011/131295 A1 discloses a method for providing a tool used for troubleshooting a component, wherein the tool is included in an application server that is in communication with multiple client computing devices.

WO 2020/152586 A1 discloses methods and systems for providing flexible information exposure in a Fifth Generation (5G) Core (5GC) and an Operations, Administration, and Maintenance (OAM) system.

### SUMMARY

The present disclosure provides a method, a control network node, a computer program and a carrier as defined in the independent claims. Developments are set forth in the dependent claims. Embodiments of the present disclosure generally relate to enabling the troubleshooting of a wireless network. To that end, particular embodiments presented herein provide a troubleshooting engine as a new network function in the core network of the wireless network. The troubleshooting engine is implemented by a control network node in the core network. The troubleshooting engine may selectively program troubleshooting tools of management entities in the network. In so doing, one or more embodiments may improve resource consumption of the network's troubleshooting functions (e.g., by combining different troubleshooting tools as needed). In some embodiments, the collection of troubleshooting information is programmed responsive to troubleshooting events that occur in the network. As a result, certain embodiments presented herein enable problems related to customer issues to be identified and solved faster and easier than possible with conventional troubleshooting tools.

Particular embodiments include a method of troubleshooting a wireless network using a troubleshooting engine implemented by a control network node of the wireless network. The method comprises receiving, from a plurality of management entities, capability information identifying troubleshooting tools for each of the plurality of management entities. The method further comprises receiving, from a troubleshooting entity, a troubleshooting intent message requesting troubleshooting information. The method further comprises identifying, using the capability information, at least one of the plurality of management entities having active troubleshooting tools capable of providing the requested troubleshooting information. The method further comprises collecting the requested troubleshooting information from the identified at least one of the plurality of management entities using the active troubleshooting tools and forwarding the collected troubleshooting information to the troubleshooting entity.

In some embodiments, the method further comprises determining, using the capability information, whether any one or more troubleshooting tools capable of providing the requested troubleshooting information are inactive and sending an activation message to each of at least one management entity associated with a corresponding one or more of the inactive troubleshooting tools. The method further comprises receiving a success message indicating successful activation of the inactive troubleshooting tools from each of the at least one management entity.

In some embodiments, the capability information comprises one or more parameters and one or more procedures for each of the troubleshooting tools.

In some embodiments, the capability information further comprises a storage option for each of the troubleshooting tools.

In some embodiments, the capability information further comprises an output format for each of the troubleshooting tools.

In some embodiments, the troubleshooting tools comprise distributed tracing and/or software tracing and/or software logging and/or crash dumping and/or network tracing.

In some embodiments, the activation message includes the capability information of the corresponding one or more inactive troubleshooting tools.

In some embodiments, collecting the troubleshooting information comprises sending a collection request to the identified at least one of the plurality of management entities to collect troubleshooting information using the active troubleshooting tools and receiving the troubleshooting information from the identified at least one of the plurality of management entities.

In some embodiments, the plurality of management entities comprise management functions and/or management services.

Other embodiments include a control network node of a wireless network. The control network node comprises processing circuitry and memory. The memory comprises instructions of a troubleshooting engine that are executable by the processing circuitry to configure the control network node to receive, from a plurality of management entities, capability information identifying troubleshooting tools for each of the plurality of management entities. The control network node is further configured to receive, from a troubleshooting entity, a troubleshooting intent message requesting troubleshooting information. The control network node is further configured to identify, using the capability information, at least one of the plurality of management entities having active trouble shooting tools capable of providing the requested troubleshooting information and collect the requested troubleshooting information from the identified at least one of the plurality of management entities using the active troubleshooting tools. The control network node is further configured to forward the collected troubleshooting information to the troubleshooting entity.

In some embodiments, the control network node is further configured to perform any of the methods described above.

Yet other embodiment include a computer program, comprising instructions which, when executed on processing circuitry of a control network node, cause the processing circuitry to carry out any of the methods described above.

Further embodiments include a carrier containing such a computer program. The carrier is one of an electronic signal, optical signal, radio signal, or computer readable storage medium.

### BRIEF DESCRIPTION OF THE DRAWINGS

Figure 1 shows a wireless network according to exemplary embodiments of the solution presented herein.
Figures 2A and 2B show exemplary management entities and the corresponding interconnections.
Figure 3 shows a block diagram of a troubleshooting engine according to exemplary embodiments of the solution presented herein.
Figure 4 shows an exemplary troubleshooting method according to exemplary embodiments of the solution presented herein.
Figure 5 shows an example of the exemplary troubleshooting method of Figure 4.
Figure 6 shows an exemplary troubleshooting method according to exemplary embodiments of the solution presented herein.
Figures 7A-7C show an example of the exemplary troubleshooting method of Figure 6.
Figure 8 shows a block diagram of a control network node according to exemplary embodiments of the solution presented herein.
Figure 9 shows a block diagram of a management entity according to exemplary embodiments of the solution presented herein.

### DETAILED DESCRIPTION

The solution presented herein improves troubleshooting, particularly in Operations, Administration, and Maintenance (OAM) areas of 5^{th} Generation (5G) networks. While the following describes the solution in terms of a 5G network, it will be appreciated that the solution presented herein is not limited to 5G networks.

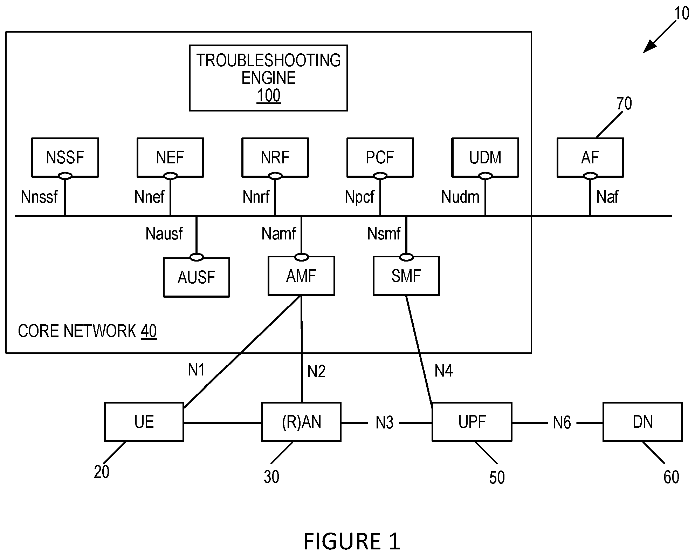

Figure 1 shows an exemplary 5G architecture for a wireless network 10 as defined by the 3^{rd} Generation Partnership Project (3GPP). The 5G architecture comprises a User Equipment (UE) 20, an Access Network 30 (e.g., a new radio (NR) access network), and a core network 40 (e.g., a 5G Core (5GC)). The core network 40 uses a service-based architecture, where architecture elements are defined in terms of network functions instead of network entities. Thus, the network functions may be implemented any number of discrete computing devices (e.g., control network nodes). The network functions are interconnected with the help of interfaces of a common framework to offer services to the users. As shown in Figure 1, core network 40 comprises a plurality of network functions, including but not limited to, a Network Slice Selection Function (NSSF), a Network Exposure Function (NEF), a Network Repository Function (NRF), a Policy Control Function (PCF), a User Data management (UDM) function, an Authentication Server Function (AUSF), an Access and Mobility management Function (AMF), and a Session Management Function (SMF). The wireless network 10 further includes a User Plane Function (UPF) 50, which is responsible for handling the user-plane data, an external Data Network (DN) 60, and an Application Function (AF) 70, which is external to the core network 40 and is responsible for handling various applications. The AF 80 interacts with the network functions in the core network 40 via the NEF. The PCF supports unified policy framework to govern network behavior. The SMF and NEF support different functionality in the network. The UPF supports handling of the user plane traffic based on the rules received from the SMF.

Effective troubleshooting relies on observability, which is the extent to which the internal states of a system can be inferred from externally available data. An observable software system, for example, provides the ability to understand any issues that arise, where the main tools for observability are metrics, logs, and traces. With respect to wireless networks, exemplary troubleshooting tools include, but are not limited to, network tracing, distributed tracing, Performance Management (PM) data analytics services, Fault Management (FM) data analytics services, debugging tools, Crash Dump, Syslog, and Simple Network Management Protocol (SNMP). Network tracing handles the content, format, and transfer of trace records within the network 10, e.g., as defined in 3GPP 32.423. Distributed tracing is used to profile and monitor applications, especially those built using a microservices architecture. Distributed tracing helps pinpoint where failures occur and what causes poor performance. PM data analytics services are used to optimize network performance, while the information provided by FM data analytics services is used to predict and prevent failures of the network. Exemplary debugging tools, which are used to debut connections, include ping, traceroute, etc. Crash Dump provides the content of the memory when processes crash. Syslog defines a set of log levels and information that should be collected in each level, e.g., as defined in Internet Engineering Task Force (IETF) Request for Comments (RFC) 5424. As used herein, Syslog may also be referred to as Software Tracing, which represents the capability of logging the levels and information using syslog. SNMP offers a fixed set of alarms that alert end users to possibly unanticipated aspects of network operation and management, e.g., as defined in IETF RFC 3411.

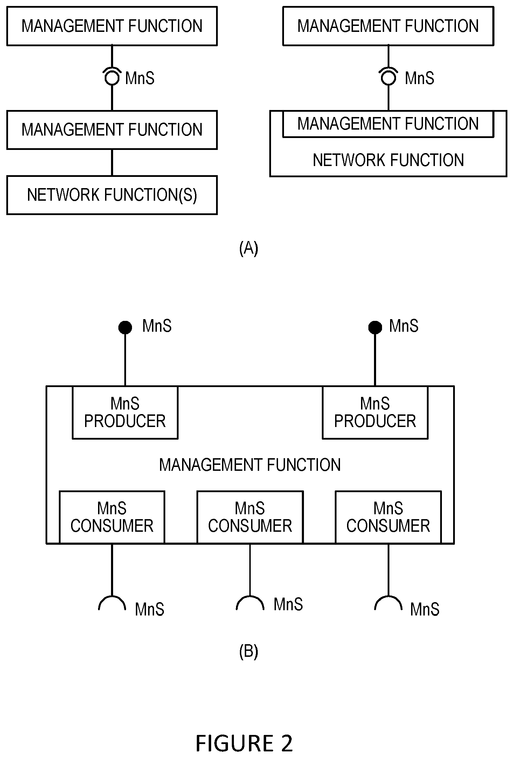

One aspect of network control, and thus of troubleshooting, involves the architecture framework of management and orchestration, e.g., as defined in 3GPP 28.533, which defines Management Functions (MnFs) and Management Services (MnSs). As used herein, MnFs and MnSs are generally and jointly referred to as management entities. MnFs are functions whose externally observable behavior and interfaces are specified by 3GPP as MnSs. Exemplary MnFs include the network functions in the core network 40, e.g., the PCF. MnSs offer capabilities for management and orchestration of network functions and services, where an MnS producer produces the MnS and an MnS consumer consumes the MnS. An MnS provided by an MnS producer can be consumed by any entity with appropriate authorization and authentication. Figure 2A shows an exemplary interconnection between MnFs and MnSs, while Figure 2B shows the relationships between MnFs, MnSs, MnS consumers, and MnS producers. 3GPP 28.533 also defines the Management Data Analytics (MDAs) that utilize network management data collected from the network (including e.g., service, slicing, and/or network functions related data), and that make the corresponding analytics based on the collected information. For example, the information provided by PM data analytics services may be used to optimize network performance, while the information provided by FM data analytics services may be used to predict and prevent failures of the network 10. MDAs can be deployed at a number of different levels, e.g., at a domain level (e.g., RAN, CN, NSSI) and/or in a centralized manner (e.g., at a Public Land Mobile Network (PLMN) level). 3GPP 32.421 defines an exemplary high-level architecture of trace reporting for a non-shared scenario.

Another aspect of network control involves an Intent Framework for an Open Network Operating System (ONOS). The Intent Framework allows applications, e.g., associated with the AF 70, to specify their network control desires via policy rather than mechanism, where such policy-based directives represent intents. For ONOS, the core accepts the intent specifications and translates them, via intent compilation, into installable intents, which are essentially actionable operations on the network environment. Generally, an intent is an immutable model object that describes an application's request to alter the network's behavior. Intents may be described in terms of Network Resources, Constraints, Criteria, and Instructions. The Network Resources represent a set of object models, e.g., links, that tie back to the parts of the network affected by an intent. The Constraints represent weights applied to a set of network resources, e.g., bandwidth, optical frequency, and link type. The Criteria represent packet header fields or patterns that describe a slice of traffic. For example, an Intent's TrafficSelector carries criteria as a set of objects that implement the Criterion interface. The Instructions represent actions to apply to a slice of traffic, e.g., header field modifications, or outputting through specific ports. An Intent's TrafficTreatment, for example, carries instructions as a set of objects that implement the Instruction interface. In addition, Intents are identified by both the Applicationld of the application that submitted it, and a unique Intentld, generated at creation.

A third aspect of network control involves network discovery. Managing networks in Software Defined Networking (SDN) requires an SDN controller to have fresh information about the condition of the network, especially topology. Therefore, it is important to have a reliable mechanism for discovering the network topology such that the SDN controller has information about every device in the network and the connection channels that link them. To keep the service running, it is important to have an almost real-time vision about the topology of the network in an SDN network, especially for large networks. The current protocol operated by current controllers is OpenFlow Discovery Protocol, which facilitates the topology discovery.

There are several tools for troubleshooting in wireless networks. Conventional troubleshooting solutions, however, fail to provide a complete analysis of what is happening within the network, making it difficult to fully analyze and/or address a problem. For example, troubleshooting engineers currently have to use different methods and tools to understand what is happening within the network. Further, for performance problem diagnosis/isolation, there is a very important distinction to be drawn between "first use" problems, and problems that occur in a subsequent use. For example, during a "first use," e.g., when first attempting to use a distributed system application in a situation (i.e. in a particular hardware/software configuration, to a particular remote host, etc.), a performance failure could literally be caused by anything. However, if the app has previously been successfully used in that situation, the problem could still be "anything," but it is expected that the most likely source of the problem would be the "dynamic" and usage-sensitive aspects of the system, e.g., server or link congestion, routing problems, etc. Thus, by identifying a problem as being associated with a "first use" or a "subsequent use," troubleshooting systems can narrow down the focus of the troubleshooting efforts. However, currently dynamic or "transient" performance problems are particularly hard to troubleshoot, because in many cases, by the time all the necessary instrumentation has been marshalled, the problem has disappeared. Further, troubleshooting tools cannot currently be programmed. Instead, all of them are configured statically. As a result, troubleshooting tools must be combined offline in order to troubleshoot a particular problem. This extra effort is particularly problematic for dynamic performance problems, which already suffered from delay issues.

SDN does provide some troubleshooting tools that can be programmed. For example, a network debugger, e.g., similar to the GNU Project debugger, may be used to allow a troubleshooting engineer to see what is going on 'inside' another program while the program runs, or allows the troubleshooting engineer to see what another program was doing at the moment it crashed. Such network debuggers, allow troubleshooting engineers to see what happens when an end user was unable to successfully perform an operation. However, such network debuggers also need to collect packet traces called postcards and back traces that need to provide a specific format and dump information about packets. Also, network debugging solutions assume that all network devices are from the same type of device (routers).

In light of the programming limitations of current troubleshooting solutions, and the fact that network functions in a wireless network each implement their own software and thus are not from the same "type of device," improved troubleshooting solutions are needed. One or more of the embodiments disclosed herein address these problems by providing a centralized troubleshooting engine that facilitates the control and programming of troubleshooting tools used throughout the wireless network, and that provides a centralized collection point for collecting troubleshooting information. To that end, the solution presented herein combines existing troubleshooting tools associated with external collection points at a centralized troubleshooting engine, e.g., located in the control network 40, which improves resource consumption associated with troubleshooting operations, and which enables the collection of troubleshooting information according to specific events that may be selected/programmed by the troubleshooting engineer. With the information collected and provided by the troubleshooting engine, troubleshooting engineers may solve customer service issues faster and more easily than possible with conventional troubleshooting solutions. While the troubleshooting engine of the solution presented herein uses existing troubleshooting tools, it will be appreciated that alternative troubleshooting tools may be created and/or used by the troubleshooting engine.

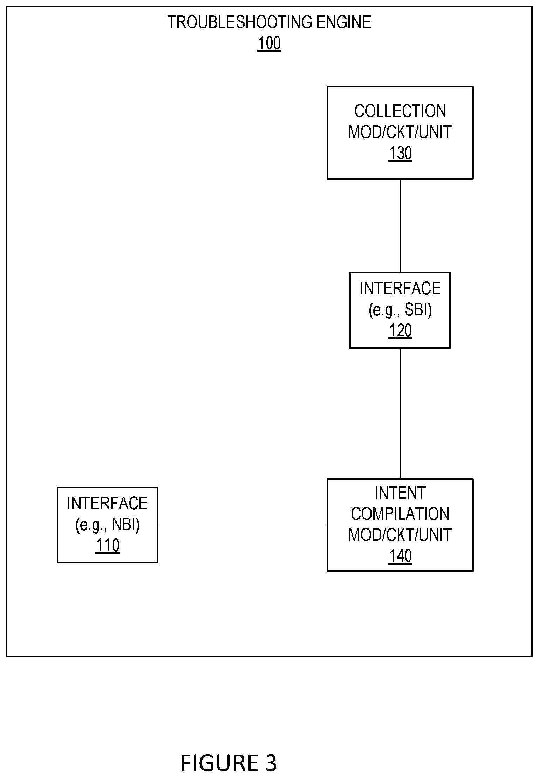

Figure 3 shows a block diagram of an exemplary troubleshooting engine 100 according to embodiments of the solution presented herein. The troubleshooting engine 100 executes on a computing system (e.g., a control network node) within the core network 40 and registers in the core network 40 as a new function (e.g., using the service registration capabilities of Consul or other software). Registering in the core network 40 enables the troubleshooting engine 100 to interact with the other network functions of the core network 40, also referred to herein as management entities 200. The management entities 200 discover that the troubleshooting engine 100 is part of the core network 40, e.g., using service discovery capabilities.

Troubleshooting engine 100 comprise two interfaces: a North Bound Interface (NBI) 110 responsible for communications between the troubleshooting engine 100 and an end user, e.g., troubleshooting engineers, and a South Bound Interface (SBI) 120 responsible for communications between the troubleshooting engine 100 and the management entities 200, e.g., one or more MnFs and/or one or more MnSs. In exemplary embodiments, the SBI 120 understands architecture procedures and has the ability to know the topology of the network 10 in the same way, e.g., as an SDN controller knows the network topology. The troubleshooting engine 100 further comprises a collection unit 130 configured to collect information from the management entities 200, e.g., troubleshooting information using active troubleshooting tools. For example, the collection unit 130 may receive events or information from files of an affected management entity 200. The troubleshooting engine 100 may further comprise an intent compilation unit 140 configured to interpret and translate intent orders, e.g., in an intent message received from an end user into corresponding actions for a management entity 200, e.g., interpret and translate a request to access to troubleshooting tools, into corresponding actions for a particular management entity 200 having the corresponding troubleshooting tools. For example, responsive to the intent message, the compilation unit 140 may identify one or more management entities in the wireless network 10 having active troubleshooting tools capable of providing requested troubleshooting information. As such, the troubleshooting engine 100 of the solution presented herein provides centralized collection of troubleshooting information, as well as provides a troubleshooting engineer with a way to program troubleshooting tools based on conditions observed in real time, e.g., via the intent compilation unit 140.

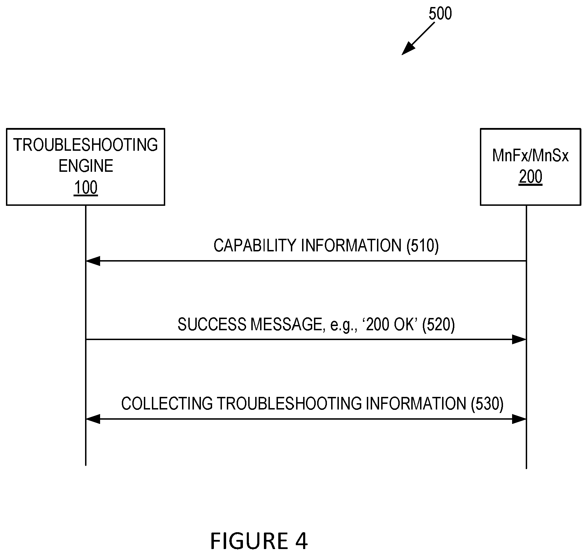

Figure 4 shows an exemplary method 500 of troubleshooting engine 100 collecting troubleshooting information for the wireless network 10 from a management entity 200, e.g., an MnF or an MnS. The method 500 comprises the troubleshooting engine 100, e.g., the SBI 120, receiving capability information identifying troubleshooting tools for a management entity 200 (510), and sending a success message to the management entity 200 to indicate successful activation of the troubleshooting tools responsive to the received capability information (520) when it is possible to activate the troubleshooting tool. In some cases, the troubleshooting engine 100 cannot activate the troubleshooting tool, e.g., because the processing resources of the corresponding management entity 200 are insufficient. In these cases, the troubleshooting engine 100 does not send a success message, and may send some type of failure message, e.g., a 503 Service Unavailable message. Exemplary troubleshooting tools include, but are not limited to, distributed tracing, software tracing, software logs, crash dump, and/or network tracing. In exemplary embodiments, the success message comprises a "200 OK message" in accordance with standard HTTP status codes. Subsequently, the troubleshooting engine 100, e.g., the collection unit 130, collects troubleshooting information from the management entity (200) using active troubleshooting tools (530). For example, the troubleshooting engine 100 may collect the troubleshooting information by sending a collection request to the management entity 200 to collect the troubleshooting information using active troubleshooting tools, and receive the collected troubleshooting information from the management entity 200. This exemplary embodiment demonstrates how the troubleshooting engine 100 provides a centralized location for collecting troubleshooting information.

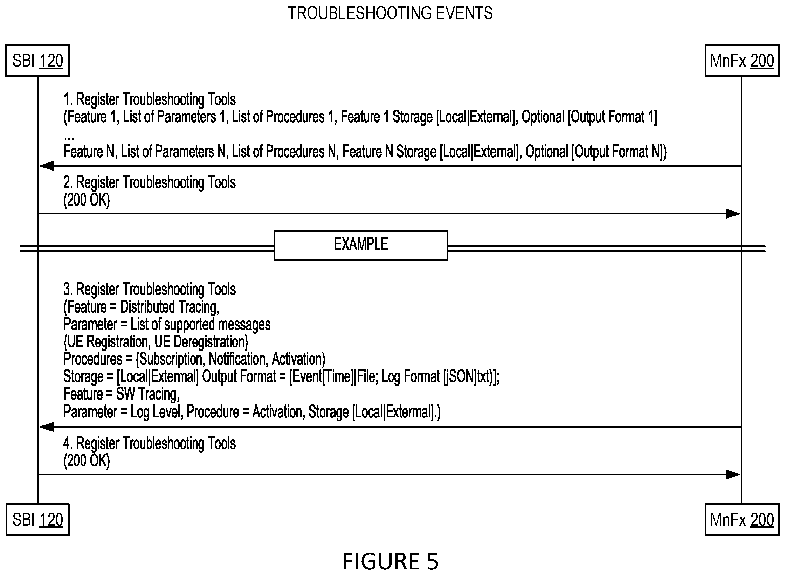

Figure 5 shows one example of the troubleshooting collection method 500 of Figure 4. In this example, the SBI 120 of the troubleshooting engine 100 receives capability information as part of a "registration" or "activation" of the troubleshooting tools identified by the received capability information. In this example, the capability information includes a list of parameters, a list of procedures, and a storage option for each of the N troubleshooting tools identified by the *n*^{th} Feature (line item 1). In some optional embodiments, the capability information may also include an output format for the troubleshooting tool. The troubleshooting engine 100 then activates at least one of the identified troubleshooting tools, and preferably all of the identified troubleshooting tools by sending a '200 OK' message to the MnFx 200 (line item 2). For example, the SBI 120 may receive capability information for each of a distributed tracing tool and a software tracing tool (line item 3), which not only identifies the distributed and software tracing tools, but also identifies the parameters, procedures, storage, and output format for each. In this example, the capability information for the distributed tracing tool identifies the associated parameters as a list of supported messages (UE Registration and UE Deregistration), the associated procedures as subscription, notification, and activation, the storage options as local and external, and the output format as event (time) and log format (JSON|txt). Also, in this example, the capability information for the software tracing tool identifies the associated parameters as a Log Level, the associated procedures as activation, and the storage options as local and external. The troubleshooting engine 100 then activates both the distributed tracing tool and software tracing tool identified in the received compatibility information by sending a 200 OK message to the MnFx 200.

In some situations, the troubleshooting tools capable of providing requested information have not been activated, even if the corresponding capability information has been provided to the troubleshooting engine 100. The solution presented herein also provides techniques for allowing troubleshooting entities, e.g., troubleshooting engineers, to select specific troubleshooting tools, e.g., using an intent framework, to obtain the desired troubleshooting information. An exemplary troubleshooting intent framework may be defined as follows:
- Network Resource: A set of object models, e.g., MnS and/or MNF, that tie back to the parts of the network 10 affected by a troubleshooting intent.
- Constraints: Weights applied to a set of troubleshooting tools, e.g., distributed tracing, software tracing, etc.
- Criteria: Packet header fields or patterns that describe the type of traffic to be troubleshot by the network resource. In other words, the criteria selects the type of messages needed for troubleshooting. For example, an Intent's TrafficSelector carries criteria as a set of objects that implement the Criterion interface.
- Instructions: Actions to apply to the troubleshooting tool of the network resource when the criteria is met. Exemplary instructions include, but are not limited to activation, deactivation, notification, subscription. A troubleshooting engineer may also use the instructions to define a format in which output information should be provided.

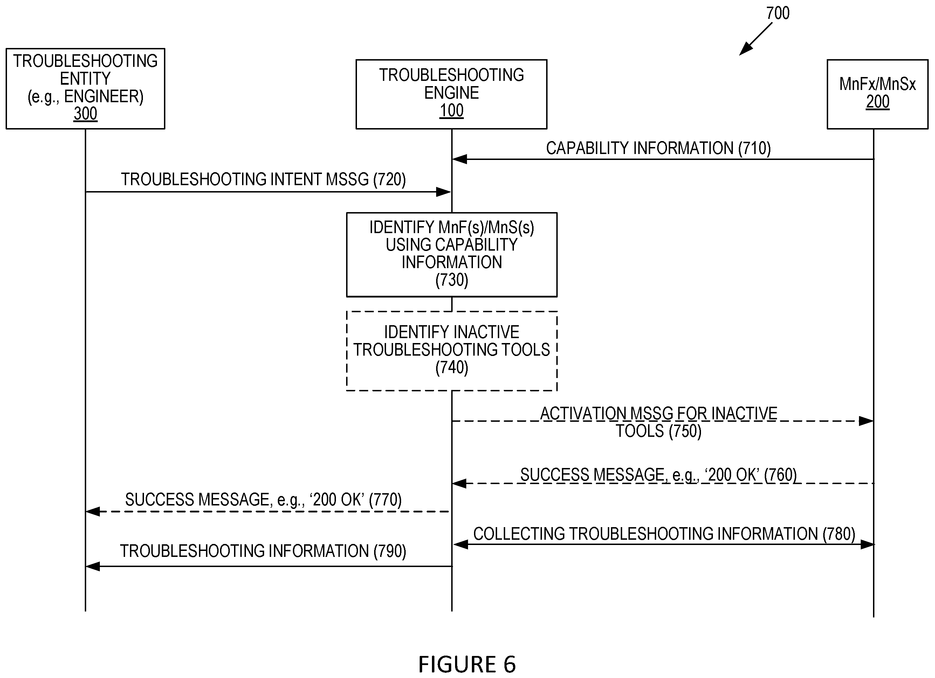

Figure 6 shows an exemplary method 700 for intent-based troubleshooting between the troubleshooting engine 100 and multiple management entities 200. The troubleshooting engine 100 receives (710), e.g., at the SBI 120 and from a plurality of management entities 200, capability information identifying troubleshooting tools for each of the plurality of management entities 200. Further, the troubleshooting engine receives (720), e.g., at the NBI 110, a troubleshooting intent message requesting troubleshooting information from a troubleshooting entity 300, e.g., via a command line interface. The troubleshooting engine 100 identifies (730), using the received capability information, at least one of the plurality of management entities 200 having active troubleshooting tools capable of providing the requested troubleshooting information. The troubleshooting engine 100 then collects (780) the requested troubleshooting information from the identified management entity(ies) 200 using the active troubleshooting tools. For example, the troubleshooting engine 100 may send a collection request to the identified management entity(ies) 200 to collect troubleshooting information using the active troubleshooting tool(s) and receive (780) the collected troubleshooting information from the identified management entity(ies) 200. Subsequently, the troubleshooting engine 100 forwards (790) the collected troubleshooting information to the troubleshooting entity 300.

In some cases, the troubleshooting tools capable of providing the requested troubleshooting information are inactive, e.g., because of insufficient processing and/or memory resources at the corresponding management entity 200. The solution presented herein optionally addresses this scenario by using the compilation unit 140 to determine (740) whether any one or more troubleshooting tools capable of providing the troubleshooting information requested in the intent message are inactive. The troubleshooting engine 100 sends (750) an activation message to the management entity(ies) 200 to activate the corresponding inactive troubleshooting tools. The troubleshooting engine 100 then receives (760) a success message indicating successful activation of the inactive troubleshooting tools from the management entity(ies) 200. In some embodiments, the troubleshooting engine may further forwards (770) the 200 OK message to the troubleshooting entity 300. Subsequently, the troubleshooting engine 100 collects (780) the requested troubleshooting information from the management entities 200 using the active troubleshooting tools. As such, the solution presented herein not only enables troubleshooting engineers to select specific information, and thus program the troubleshooting tools, but it also enables the activation of troubleshooting tools for specific purposes. At this point, the troubleshooting engine 100 proceeds to obtain troubleshooting information from the active troubleshooting tools, as disclosed herein.

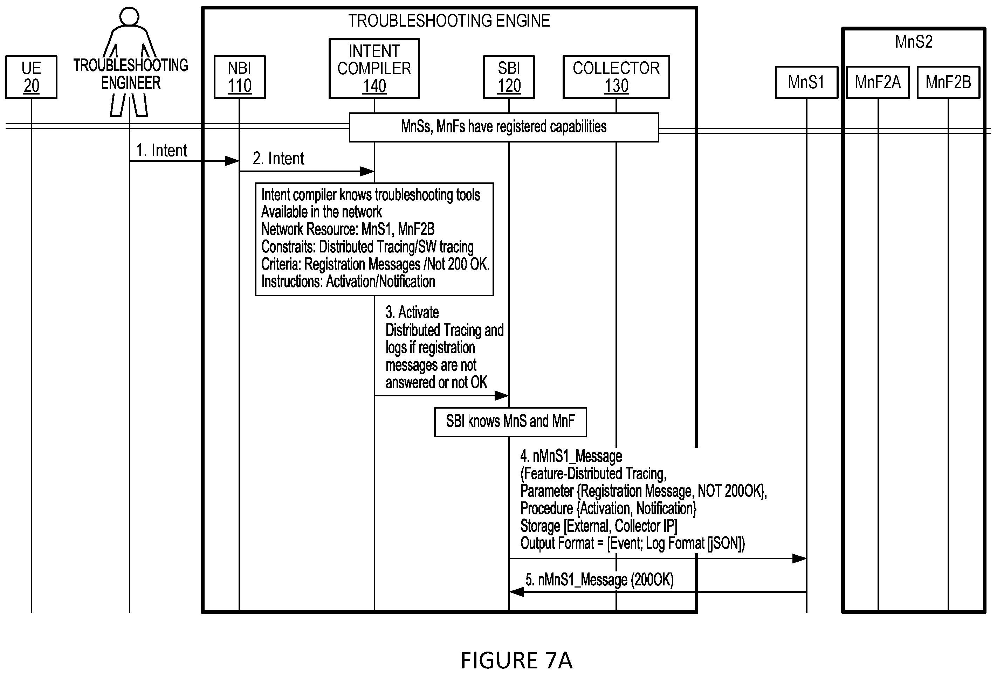

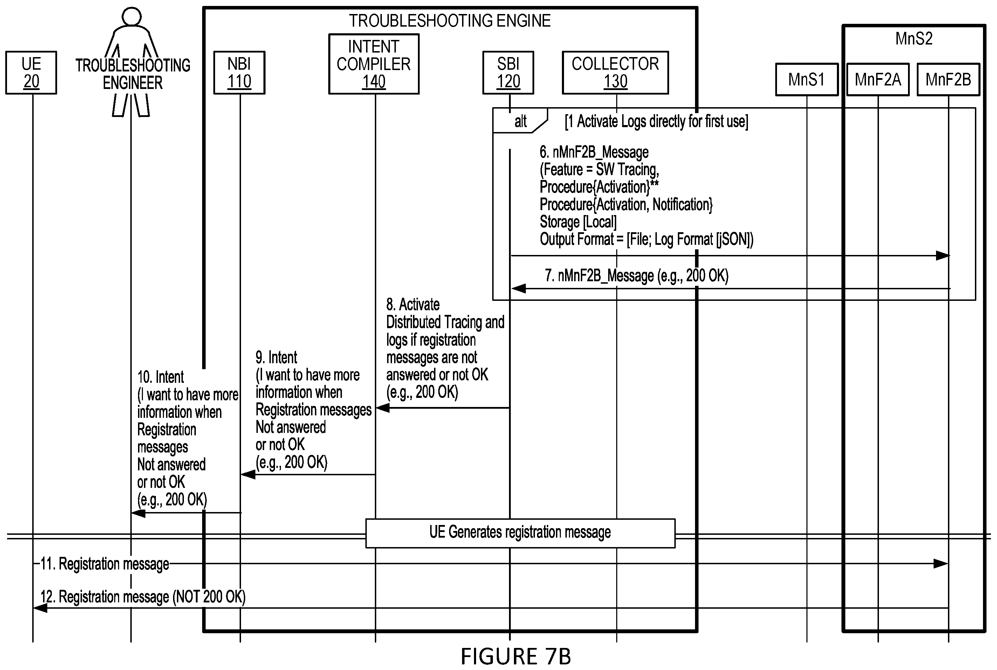

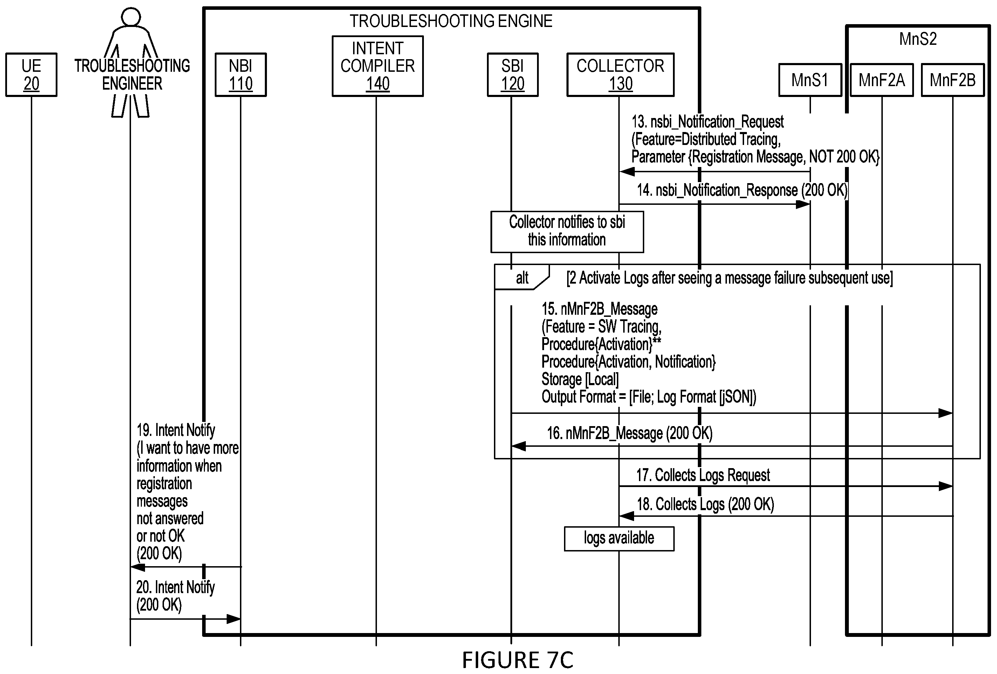

Figures 7A-7C shows a detailed example for the embodiment of Figure 6. The following details the steps of Figure 7A-7C.

As Step 0 or prerequisite, MNS and MNF have registered their capabilities according to similar procedure of Figure 4 or Figure 5.

In this example, MNS1 has registered that it has distributed tracing and software tracing tools, with all possible messages and with (de) activation and notification instructions. MNS1 can provide this information using event or file that can be stored locally or externally in txt or json format.

MNF2A registers that can provide distributed tracing and software tracing with all possible messages and with (de) activation and notification instructions. MNF2A can provide this information using event or file that can be stored locally or externally in txt or json format.

MNF2B only can provide software tracing with (de) activation. It cannot provide information at granularity messages level All of them are activated. MNF2B can provide this information using event or file that can be stored locally or externally in txt or json format.

Step 1: Troubleshooting engineers want to know specific information, and thus sends a troubleshooting intent message according to solutions disclosed herein. In this example, the troubleshooting engineer uses intent as explained herein but other languages may be employed, e.g., Cucumber (Gherkin Reference - Cucumber Documentation).

Step 2: The NBI 110 sends the received troubleshooting intent message to the intent compilation unit 140.

Step 3: The intent compilation unit 140 translates the received troubleshooting intent message according to, e.g.:
- Network Resource: MNS1, MNF2B
- Constraints: Distributed Tracing/Software tracing
- Criteria: Registration Messages /Not 200 OK.
- Instructions: Activation/Notification

The troubleshooting engine 100 knows a previous activation process, e.g., as in Figure 4, which management entities 200 have provided capability information.

Step 4: The SBI 120, using network topology discover, knows the IP addresses of the management entities 200 associated with the received intent request. According to solutions presented herein, the SBI 120 sends the following message to the management entity 200 defining that the distributed tracing troubleshooting tools be active when previous messages are not 200 OK. The SBI 120 activates the tracking of those messages and the notification when there is a new message. In this case, the management entity 200, e.g., MnS1, provides events in JSON format externally. The SBI 120 knows that MNS1 is in the path between the originator of the Registration message and the destination of the message (e.g., MNF2B) because it has been preconfigured in the troubleshooting. In this case the following parameters are sent
- Feature: Distributed Tracing
- Parameter: Registration Message / Not 200 OK.
- Procedure: Activation/Notification.
- Storage: External, Collector IP.
- Output format: Event. Log format. JSON

Those parameters come from the intention instructions of step 3.

Step 5: The management entity 200, e.g., MnS1 answers correctly to the previous message, e.g., via a 200 OK message.

Step 6: (Alternative to Steps 4 and 5): if the troubleshooting engineer wants to get the "first use" of a NOT 200 OK answer to a registration message, the troubleshooting engine 100, using the SBI 120, sends the following message to MnF2B. The SBI 120 knows that the MnF2B is the one that answers registration message procedure.
- Feature: SW Tracing
- Procedure: Activation
- Storage: Local.
- Output format: File. Log format. Txt

Step 7: MnF2B answers correctly the previous request, e.g., via a 200 OK message.

Step 8: The SBI 120 answers positively to the troubleshooting intent message from step 3.

Step 9: Intent compilation unit 140 answers positively the troubleshooting intent message from step 2, e.g., via a 200 OK message.

Step 10: The NBI 110 answers positively to the troubleshooting intent message from step 1 to the troubleshooting engineer, e.g., via a 200 OK message.

Subsequently, the UE may generate a registration request, e.g., steps 11-20.

Step 11: The corresponding UE 20 generates a registration message towards the MnF2B that is the one capable of answering the registration message, e.g., has the requested troubleshooting tools.

Step 12: MnF2B answers with a NOT 200 OK message (invalid request).

Step 13: MnS1 notifies the SBI 120 that a NOT 200 OK message is seen for a registration message. In this case it has been sent using HTTP, but other methods, e.g., SNMP alerts can be used, e.g., as defined in https://www.rfc-editor.org/rfc/rfc1224.html.

Step 14: The SBI 120 answers correctly to MnS1.

Step 15: In current solutions troubleshooting engineers individually activate all troubleshooting tools. In this particular case, troubleshooting tools are only activated when the tools in another node have seen a NOT 200 OK message.

If alternative 2 is that troubleshooting engineers want to track once an event is seen.

The troubleshooting engine 100, using the SBI 120, sends the following message to the MnF2B.
- Feature: SW Tracing
- Procedure: Activation
- Storage: Local.
- Output format: File. Log format. Txt

The SBI 120 knows that MnF2B is the one that answers registration message procedure.

Step 16: the MnF2B answers the previous request correctly, e.g., via a 200 OK message.

Step 17: The collection unit 130 collects logs periodically from the MnF2B.

Step 18: The MnF2B answers correctly to this collection of logs., e.g., via a 200 OK message.

Step 19: The collection unit 130 indicates internally that the logs are collected for MnF2B and MnS1. The collection unit 130 sends a notification to troubleshooting engineer telling them that they can find more information about the troubleshooting intent requested in step 1.

Step 20: The troubleshooting engineer acknowledges request of step 19, e.g., via a 200 OK message.

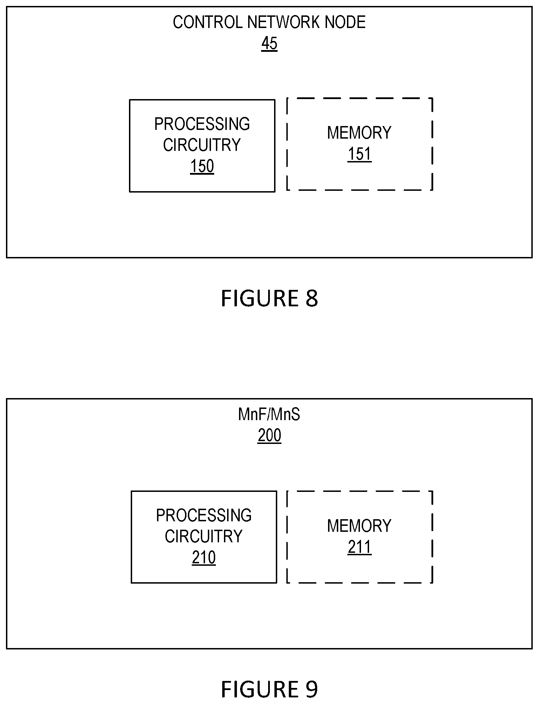

Figure 8 shows an alternative exemplary block diagram for a control network node 45 configured to provide the troubleshooting engine 100, while Figure 9 shows an exemplary block diagram for a management entity 200, e.g., MnF or MnS. The control network node 45 comprises processing circuitry 150 configured to implement any of the methods disclosed herein, e.g., method 500 and/or method 700, from the perspective of the troubleshooting engine 100. The management entity 200 comprises processing circuitry 210 configured to implement any of the methods disclosed herein, e.g., method 500 and/or method 700, from the perspective of the management entity 200.

Note that the apparatuses described herein may perform the methods herein, and any other processing, by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory 151, 211. For example, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein. Thus, various apparatus elements disclosed herein, e.g., a troubleshooting engine, collection circuit, intent compilation circuit, etc., may implement any functional means, modules, units, or circuitry, and may be embodied in hardware and/or in software (including firmware, resident software, microcode, etc.) executed on a controller or processor, including an application specific integrated circuit (ASIC).

The embodiments presented herein provide a means for registering troubleshooting tools that, under programmable conditions, will start collecting data and send it to troubleshooters for analysis. To that end, the solution presented herein provides a troubleshooting engine as a new network function in the core network 40, which is able to selectively program troubleshooting tools of management entities 200 in the network 10 by offering a troubleshooting intent framework that a troubleshooting entity, e.g., a troubleshooting engineer, can use to program the troubleshooting tools. In so doing, the solution presented herein improves resource consumption (e.g., by combining different existing troubleshooting tools from an external point according to some specific events/controls provided by the troubleshooting tool. Further, the solution presented herein provides a framework for programming the collection of troubleshooting information, e.g., responsive to troubleshooting events that occur in the network. As a result, the solution presented herein enables problems related to customer issues to be identified and solved faster and easier than possible with conventional troubleshooting tools.

## Claims

1. A method (700) of troubleshooting a wireless network (10) using a troubleshooting engine (100) located in a core network (40) of the wireless network (10) and implemented by a control network node (45) within the core network (40), the method (700) comprising:
receiving (710), from a plurality of management entities (200), capability information identifying troubleshooting tools for each of the plurality of management entities (200);
receiving (720), from a troubleshooting entity (300) a troubleshooting intent message requesting troubleshooting information;
identifying (730), using the capability information, at least one of the plurality of management entities (200) having active troubleshooting tools capable of providing the requested troubleshooting information;
collecting (780) the requested troubleshooting information from the identified at least one of the plurality of management entities (200) using the active troubleshooting tools; and
forwarding (790) the collected troubleshooting information to the troubleshooting entity (300).

2. The method (700) of claim 1, further comprising:
determining (740), using the capability information, whether any one or more troubleshooting tools capable of providing the requested troubleshooting information are inactive;
sending (750) an activation message to each of at least one management entity (200) associated with a corresponding one or more of the inactive troubleshooting tools; and
receiving (760) a success message indicating successful activation of the inactive troubleshooting tools from each of the at least one management entity (200).

3. The method (700) of any one of claims 1-2, wherein the capability information comprises one or more parameters and one or more procedures for each of the troubleshooting tools.

4. The method (700) of any one of claims 1-3, wherein the capability information further comprises a storage option for each of the troubleshooting tools.

5. The method (700) of any one of claims 1-4, wherein the capability information further comprises an output format for each of the troubleshooting tools.

6. The method (700) of any one of claims 1-5, wherein the troubleshooting tools comprise:
distributed tracing; and/or
software tracing; and/or
software logging; and/or
crash dumping; and/or
network tracing.

7. The method (700) of any one of claims 1-6, wherein the activation message includes the capability information of the corresponding one or more inactive troubleshooting tools.

8. The method (700) of any one of claims 1-7, wherein the collecting the troubleshooting information comprises:
sending a collection request to the identified at least one of the plurality of management entities (200) to collect troubleshooting information using the active troubleshooting tools; and
receiving the troubleshooting information from the identified at least one of the plurality of management entities (200).

9. The method (700) of any one of claims 1-8, wherein the plurality of management entities (200) comprise management functions and/or management services.

10. A control network node (45) located within a core network (40) of a wireless network (10), the control network node (45) comprising:
processing circuitry (150) and memory (151), wherein the memory (151) comprises instructions of a troubleshooting engine (100) that are executable by the processing circuitry (150) to configure the control network node (45) to:
receive, from a plurality of management entities (200), capability information identifying troubleshooting tools for each of the plurality of management entities (200);
receive, from a troubleshooting entity (300), a troubleshooting intent message requesting troubleshooting information;
identify, using the capability information, at least one of the plurality of management entities (200) having active trouble shooting tools capable of providing the requested troubleshooting information;
collect the requested troubleshooting information from the identified at least one of the plurality of management entities (200) using the active troubleshooting tools; and
forward the collected troubleshooting information to the troubleshooting entity (300).

11. The control network node (45) of claim 10, further configured to perform the method (700) of any one of claims 2-9.

12. A computer program, comprising instructions which, when executed on processing circuitry (150) of a control network node (45), cause the processing circuitry (150) to carry out the method (700) according to any one of claims 1-9.

13. A carrier containing the computer program of the preceding claim, wherein the carrier is one of an electronic signal, optical signal, radio signal, or computer readable storage medium.

## Patentansprüche

1. Verfahren (700) zur Fehlerbehebung in einem drahtlosen Netzwerk (10) unter Verwendung einer in einem Kernnetzwerk (40) des drahtlosen Netzwerks (10) befindlichen Fehlerbehebungs-Engine (100), das von einem Steuerungsnetzwerkknoten (45) innerhalb des Kernnetzwerks (40) implementiert wird, wobei das Verfahren (700) Folgendes umfasst:
Empfangen (710) von Fähigkeitsinformationen von einer Mehrzahl von Verwaltungsentitäten (200), die Fehlerbehebungstools für jede der Mehrzahl von Verwaltungsentitäten (200) identifizieren;
Empfangen (720) einer Fehlerbehebungsabsichtsnachricht, die Fehlerbehebungsinformationen anfordert, von einer Fehlerbehebungsentität (300);
Identifizieren (730) mindestens einer der Mehrzahl von Verwaltungsentitäten (200) mit aktiven Fehlerbehebungstools, die in der Lage sind, die angeforderten Fehlerbehebungsinformationen bereitzustellen, unter Verwendung der Fähigkeitsinformationen;
Sammeln (780) der angeforderten Fehlerbehebungsinformationen von der identifizierten mindestens einen der Mehrzahl von Verwaltungsentitäten (200) unter Verwendung der aktiven Fehlerbehebungstools; und
Weiterleiten (790) der gesammelten Fehlerbehebungsinformationen an die Fehlerbehebungsentität (300).

2. Verfahren (700) nach Anspruch 1, ferner umfassend:
Bestimmen (740) unter Verwendung der Fähigkeitsinformationen, ob ein oder mehrere Fehlerbehebungstools, die in der Lage sind, die angeforderten Fehlerbehebungsinformationen bereitzustellen, inaktiv sind;
Senden (750) einer Aktivierungsnachricht an jede der mindestens einen Verwaltungsentität (200), die mit einem oder mehreren entsprechenden der inaktiven Fehlerbehebungstools assoziiert ist; und
Empfangen (760) einer Erfolgsnachricht, die erfolgreiche Aktivierung der inaktiven Fehlerbehebungstools angibt, von jeder der mindestens einen Verwaltungsentität (200).

3. Verfahren (700) nach einem der Ansprüche 1-2, wobei die Fähigkeitsinformationen einen oder mehrere Parameter und eine oder mehrere Prozeduren für jedes der Fehlerbehebungstools umfassen.

4. Verfahren (700) nach einem der Ansprüche 1-3, wobei die Fähigkeitsinformationen ferner eine Speicheroption für jedes der Fehlerbehebungstools umfassen.

5. Verfahren (700) nach einem der Ansprüche 1-4, wobei die Fähigkeitsinformationen ein Ausgabeformat für jedes der Fehlerbehebungstools umfassen.

6. Verfahren (700) nach einem der Ansprüche 1-5, wobei die Fehlerbehebungstools Folgendes umfassen:
verteiltes Tracing; und/oder
Software-Tracing; und/oder
Software-Protokollierung; und/oder
Crash-Dumping; und/oder
Netzwerk-Tracing.

7. Verfahren (700) nach einem der Ansprüche 1-6, wobei die Aktivierungsnachricht die Fähigkeitsinformationen des einen oder der mehreren entsprechenden inaktiven Fehlerbehebungstools umfasst.

8. Verfahren (700) nach einem der Ansprüche 1-7, wobei das Sammeln der Fehlerbehebungsinformationen Folgendes umfasst:
Senden einer Sammelanforderung an die identifizierte mindestens eine der Mehrzahl von Verwaltungsentitäten (200), um Fehlerbehebungsinformationen unter Verwendung der aktiven Fehlerbehebungstools zu sammeln; und
Empfangen der Fehlerbehebungsinformationen von der identifizierten mindestens einen der Mehrzahl von Verwaltungsentitäten (200).

9. Verfahren (700) nach einem der Ansprüche 1-8, wobei die Mehrzahl von Verwaltungsentitäten (200) Verwaltungsfunktionen und/oder Verwaltungsdienste umfasst.

10. Steuerungsnetzwerkknoten (45), der sich innerhalb eines Kernnetzwerks (40) eines drahtlosen Netzwerks (10) befindet, wobei der Steuerungsnetzwerkknoten (45) Folgendes umfasst:
Verarbeitungsschaltungsanordnung (150) und Speicher (151), wobei der Speicher (151) Anweisungen einer Fehlerbehebungs-Engine (100) umfasst, die von der Verarbeitungsschaltungsanordnung (150) ausgeführt werden können, um den Steuerungsnetzwerkknoten (45) zu Folgendem zu konfigurieren.
Empfangen von Fähigkeitsinformationen von einer Mehrzahl von Verwaltungsentitäten (200), die Fehlerbehebungstools für jede der Mehrzahl von Verwaltungsentitäten (200) identifizieren;
Empfangen einer Fehlerbehebungsabsichtsnachricht, die Fehlerbehebungsinformationen anfordert, von einer Fehlerbehebungsentität (300);
Identifizieren mindestens einer der Mehrzahl von Verwaltungsentitäten (200) mit aktiven Fehlerbehebungstools, die in der Lage sind, die angeforderten Fehlerbehebungsinformationen bereitzustellen, unter Verwendung der Fähigkeitsinformationen;
Sammeln der angeforderten Fehlerbehebungsinformationen von der identifizierten mindestens einen der Mehrzahl von Verwaltungsentitäten (200) unter Verwendung der aktiven Fehlerbehebungstools; und
Weiterleiten der gesammelten Fehlerbehebungsinformationen an die Fehlerbehebungsentität (300).

11. Steuerungsnetzwerkknoten (45) nach Anspruch 10, der ferner zum Durchführen des Verfahrens (700) nach einem der Ansprüche 2-9 konfiguriert ist.

12. Computerprogramm, umfassend Anweisungen, die bei Ausführung auf Verarbeitungsschaltungsanordnung (150) eines Steuerungsnetzwerkknotens (45) die Verarbeitungsschaltungsanordnung (150) zum Durchführen des Verfahrens (700) nach einem der Ansprüche 1-9 veranlassen.

13. Datenträger, der das Computerprogramm nach dem vorhergehenden Anspruch enthält, wobei der Datenträger eines von einem elektronischen Signal, einem optischen Signal, einem Funksignal oder einem computerlesbaren Speichermedium ist.

## Revendications

1. Procédé (700) de dépannage d'un réseau sans fil (10) à l'aide d'un moteur de dépannage (100) situé dans un réseau central (40) du réseau sans fil (10) et mis en œuvre par un nœud de réseau de commande (45) au sein du réseau central (40), le procédé (700) comprenant :
la réception (710), depuis une pluralité d'entités de gestion (200), d'informations de capacité identifiant des outils de dépannage pour chacune de la pluralité d'entités de gestion (200) ;
la réception (720), depuis une entité de dépannage (300), d'un message d'intention de dépannage demandant des informations de dépannage ;
l'identification (730), à l'aide des informations de capacité, d'au moins l'une de la pluralité d'entités de gestion (200) présentant des outils de dépannage actifs capables de fournir les informations de dépannage demandées ;
la collecte (780) des informations de dépannage demandées à partir de l'au moins une entité identifiée de la pluralité d'entités de gestion (200) à l'aide des outils de dépannage actifs ; et
le transfert (790) des informations de dépannage collectées à l'entité de dépannage (300).

2. Procédé (700) selon la revendication 1, comprenant en outre :
la détermination (740), à l'aide des informations de capacité, si un ou plusieurs outils de dépannage capables de fournir les informations de dépannage demandées sont ou non inactifs ;
l'envoi (750) d'un message d'activation à chacune de l'au moins une entité de gestion (200) associée à un ou plusieurs outils correspondants parmi les outils de dépannage inactifs ; et
la réception (760) d'un message de réussite indiquant une activation réussie des outils de dépannage inactifs depuis chacune de l'au moins une entité de gestion (200).

3. Procédé (700) selon l'une quelconque des revendications 1 et 2, dans lequel les informations de capacité comprennent un ou plusieurs paramètres et une ou plusieurs procédures pour chacun des outils de dépannage.

4. Procédé (700) selon l'une quelconque des revendications 1 à 3, dans lequel les informations de capacité comprennent en outre une option de stockage pour chacun des outils de dépannage.

5. Procédé (700) selon l'une quelconque des revendications 1 à 4, dans lequel les informations de capacité comprennent en outre un format de sortie pour chacun des outils de dépannage.

6. Procédé (700) selon l'une quelconque des revendications 1 à 5, dans lequel les outils de dépannage comprennent :
un traçage distribué ; et/ou
un traçage logiciel ; et/ou
une journalisation logicielle ; et/ou
un crash dumping ; et/ou
un traçage de réseau.

7. Procédé (700) selon l'une quelconque des revendications 1 à 6, dans lequel le message d'activation inclut les informations de capacité des un ou plusieurs outils de dépannage inactifs correspondants.

8. Procédé (700) selon l'une quelconque des revendications 1 à 7, dans lequel la collecte des informations de dépannage comprend :
l'envoi d'une demande de collecte à l'au moins une entité identifiée parmi la pluralité d'entités de gestion (200) pour collecter des informations de dépannage à l'aide des outils de dépannage actifs ; et
la réception des informations de dépannage depuis l'au moins une entité identifiée parmi la pluralité d'entités de gestion (200).

9. Procédé (700) selon l'une quelconque des revendications 1 à 8, dans lequel la pluralité d'entités de gestion (200) comprend des fonctions de gestion et/ou des services de gestion.

10. Nœud de réseau de commande (45) situé au sein d'un réseau central (40) d'un réseau sans fil (10), le nœud de réseau de commande (45) comprenant :
une circuiterie de traitement (150) et une mémoire (151), dans lequel la mémoire (151) comprend des instructions d'un moteur de dépannage (100) qui sont exécutables par la circuiterie de traitement (150) pour configurer le nœud de réseau de commande (45) pour :
recevoir, depuis une pluralité d'entités de gestion (200), des informations de capacité identifiant des outils de dépannage pour chacune de la pluralité d'entités de gestion (200) ;
recevoir, depuis une entité de dépannage (300), un message d'intention de dépannage demandant des informations de dépannage ;
identifier, à l'aide des informations de capacité, au moins l'une de la pluralité d'entités de gestion (200) présentant des outils de dépannage actifs capables de fournir les informations de dépannage demandées ;
collecter les informations de dépannage demandées à partir de l'au moins une entité identifiée de la pluralité d'entités de gestion (200) à l'aide des outils de dépannage actifs ; et
transférer les informations de dépannage collectées à l'entité de dépannage (300).

11. Nœud de réseau de commande (45) selon la revendication 10, configuré en outre pour réaliser le procédé (700) selon l'une quelconque des revendication 2 à 9.

12. Programme informatique, comprenant des instructions qui, lorsqu'elles sont exécutées sur une circuiterie de traitement (150) d'un nœud de réseau de commande (45), amènent la circuiterie de traitement (150) à réaliser le procédé (700) selon l'une quelconque des revendications 1 à 9.

13. Support contenant le programme informatique selon la revendication précédente, dans lequel le support est l'un parmi un signal électronique, un signal optique, un signal radio et un support de stockage lisible par ordinateur.
